# EUROPÄISCHE PATENTSCHRIFT

(11) **EP 2 011 901 B1**
(45) Veröffentlichungstag und Bekanntmachung des Hinweises auf die Patenterteilung: **18.10.2017**
(21) Anmeldenummer: 08104431.5
(22) Anmeldetag: 17.06.2008
(51) Int. Cl.: C23C 24/08, C23C 26/00, C23C 28/04, C23C 30/00, C23C 22/74, C23C 18/12, C09D 1/00, F01D 5/28

(54) **Bauteil mit einer keramischen Schicht, in die Partikel eingelagert sind, und Verfahren zu dessen Herstellung**
Component with a ceramic layer in which particles are dispersed, and method for producing same
Composant doté d'une couche céramique dans laquelle sont dispergées des particules et son procédé de fabrication

(30) Priorität: 28.06.2007 DE 102007030602
(43) Veröffentlichungstag der Anmeldung: 07.01.2009
(73) Patentinhaber: Siemens Aktiengesellschaft, 80333 München (DE)
(72) Erfinder: Arndt, Frank Dr., 13581, Berlin (DE); Jensen, Jens Dahl Dr., 14050, Berlin (DE); Krüger, Ursus Dr., 14089, Berlin (DE); Körtvelyessy, Daniel, 13469, Berlin (DE); Winkler, Gabriele, 13587, Berlin (DE)

(56) Entgegenhaltungen:
- EP-A- 0 995 816
- WO-A-2006/037702
- WO-A2-03/027348
- WO-A2-2009/000657
- US-A1- 2007 056 465
- TANG F ET AL: "Effects of variations in coating materials and process conditions on the thermal cycle properties of NiCrAlY/YSZ thermal barrier coatings" MATERIALS SCIENCE AND ENGINEERING A: STRUCTURAL MATERIALS:PROPERTIES, MICROSTRUCTURE & PROCESSING, Bd. 425, Nr. 1-2, 15. Juni 2006 (2006-06-15), Seiten 94-106, XP005481113 LAUSANNE [CH] ISSN: 0921-5093

## Beschreibung

Bauteil mit einer keramischen Schicht, in die Partikel eingelagert sind, und Verfahren zu dessen Herstellung Die Erfindung betrifft ein Bauteil mit einer die Oberfläche bildenden keramischen Schicht, wobei in der Schicht Partikel eingelagert sind.

Derartige Schichten sind in den EP 1 096 040 A2, EP 905 279 A1, EP 995 816 A1, EP 933 446 B1 und WO 2006/037702 A1 beschrieben. Insbesondere im letzten der genannten Dokumente ist ausgeführt, dass die Schicht mit Additiven in Form von Partikeln versetzt werden kann, die die Funktion von Korrosionsinhibithoren, Trockenschmierstoffen, Farbpigmenten oder eine Kombination dieser Funktionen gewährleistet.

Gem. der WO 2009/000657 A2, welche von der Anmelderin stammt und am 31.12.2008 veröffentlicht wurde, jedoch die Priorität vom 27.06.2007 beansprucht, wobei das Prioritätsdatum vor dem Anmeldetag der vorliegenden Anmeldung liegt, wird in einem Ausführungsbeispiel eine mehrlagige Schicht auf einem Bauteil beschrieben, welche aus einem Deckprecursor hergestellt wird, der folgende Bestandteile aufweist. Er besteht aus einem Bindemittel, in dem 2% Nano-Aluminiumoxid sowie 1% CrCoAl-Oxid enthalten sind.

Gemäß der WO 03/027348 A2 ist die Herstellung selbstreinigender keramischer Schichten offenbart, wie diese beispielsweise in Backöfen Verwendung finden können. Die hergestellten Schichten bestehen aus porösen keramischen Teilchen, denen beispielsweise keramische Nanoteilchen aus Aluminiumoxid beigegeben werden können. Außerdem können diese Schichten einen Farbstoff enthalten, der aus Partikeln aus einer Spinellverbindung bestehen. Die genannten Partikel werden in einem Binder dispergiert und auf die Innenwand eines Ofens aufgetragen und einer Wärmebehandlung unterworfen.

Bei der Herstellung der Schichten werden diese Partikel einer Dispersion zugesetzt, die einen Beschichtungsstoff bildet. Dieser Beschichtungsstoff wird auf das zu beschichtende Substrat aufgetragen, welches anschließend einer Wärmebehandlung unterworfen wird, um eine Aushärtung der Schicht zu erreichen. Hierbei findet gleichzeitig eine chemische Umwandlung der in der Dispersion enthaltenen Bestandteile statt, die zur Ausbildung des keramischen Gefüges der Schicht beiträgt.

Insbesondere für die zum Einsatz kommenden Farbpigmente hat es sich gezeigt, dass diese bei der Warmaushärtung bzw. bei einer späteren thermischen Beanspruchung des Bauteils einer chemischen Veränderung unterworfen sind, die auch zu einer Veränderung des optischen Eindruckes der Oberfläche führt. Dies wirkt sich dadurch aus, dass sich die Farbgebung der Oberfläche bei fortschreitendem Betrieb des Bauteils verändert. Derartige Beobachtungen können beispielsweise beim Betrieb thermisch hoch beanspruchter Tubinenschaufeln oder Kompressorschaufeln einer Gasturbine gemacht werden.

Die Aufgabe der Erfindung besteht darin, ein Bauteil mit einer keramischen Schicht, die mit farbgebenden Partikeln versetzt ist, anzugeben, welche eine vergleichsweise hohe Temperaturbeständigkeit gegen eine Farbänderung aufweist und auch dem Verschleiß der Schicht Rechnung trägt.

Diese Aufgabe wird mit dem eingangs angegebenen Bauteil erfindungsgemäß dadurch gelöst, dass die eingelagerten Partikel Nanopartikel sind, wobei einerseits Aluminiumoxid-Nanopartikel vorgesehen sind und andererseits Farbstoff-Nanopartikel vorgesehen sind, wobei letztere jeweils aus einer Verbindung des Spinell-Typs bestehen und wobei zumindest ein Teil der Farbstoff-Nanopartikel an der Oberfläche freiliegen. Es hat sich nämlich überraschenderweise gezeigt, dass die angegebenen Farbstoffe, die an sich bereits verhältnismäßig temperaturbeständig sind, durch einen Zusatz von Aluminiumoxid-Nanopartikeln stabilisiert werden, so dass die Farbstoff-Nanopartikel ohne eine Farbänderung nicht nur die für die Erzeugung der Schicht erforderliche Wärmebehandlung überstehen, sondern auch einer über längere Betriebszeiten einwirkenden thermischen Belastungen standhalten. Die herstellungsbedingte Wärmebehandlung für die Schichtbildung liegt typischerweise bei 400° C. Werden die erfindungsgemäßen Schichten beispielsweise als Schutzschichten von Kompressorschaufeln und Turbinenschaufeln einer Gasturbine verwendet, können Temperaturen bis zu 800 bis 1000° C auftreten, wobei Versuche gezeigt haben, dass auch bei diesen Beanspruchungen die Farbgebung der Oberfläche stabil bleibt.

Ein weiterer vorteilhafter Nebeneffekt des Einsatzes von Aluminiumoxid-Nanopartikeln liegt darin, dass auch die Temperaturwechselbeständigkeit der Schichten verbessert wird. Dies bedeutet, dass auch bei schnellen Abkühlungen der Schichten die Bildung von Spannungsrissen vermieden wird.

Für die zum Einsatz kommenden Farbstoff-Nanopartikel vom Spinell-Typ können folgende allgemeine Summenformeln sowie konkreten Beispiele angegeben werden:
M²⁺M₂³⁺O₄: MgAl₂O₄, MₙAl₂O₄, MnMn₂O₄, FeAl₂O₄, FeCr₂O₄, CoAl₂O₄, COCo₂O₄, NiAl₂O₄, ZnAl₂O₄, FeFe₂O₄, CoFe₂O₄, NiFe₂O₄, MgFe₂O₄, MgGa₂O₄, MgIn₂O₄;
M⁴⁺M²⁺₂O₄:
   TiMg₂O₄, TiFe₂O₄, TiZn₂O₄, SnZn₂O₄, SnCo₂O₄,
M⁶⁺M₂⁺O₄:
   Na₂MoO₄, Ag₂MoO₄

Außerdem ist erfindungsgemäß vorgesehen, dass die Schicht mehrere Lagen aufweist, wobei zumindest die Farbstoff-Nanopartikel nur in der die Oberfläche bildenden Decklage oder in der die Oberfläche bildenden Decklage und in an diese anschließenden Lagen, nicht jedoch in allen Lagen vorgesehen sind. Grundlage für diese Ausgestaltung der Erfindung ist, dass eine Farbgebung nur in den oberflächennahen Bereichen der Schicht optisch zur Wirkung kommt. Konkret müssen die Farbstoff-Nanopartikel einen Teil der Oberfläche bilden, damit ihre optischen Eigenschaften einer Absorption bestimmter Lichtwellenlängen zum Tragen kommt.

Allerdings kann es sinnvoll sein, auch Lagen unterhalb der Decklagen mit Farbstoff-Nanopartikeln zu versehen. Hintergrund hierfür ist, dass die Schicht einem gewissen Verschleiß unterworfen ist, so dass es passieren kann, dass während der Betriebszeit die erste Lage der Schicht vollständig abgetragen wird. Hierdurch lässt sich vorteilhaft gleichzeitig ein Farbindikator für den fortschreitenden Schichtverschleiß verwirklichen. Sind nämlich die Farb-Nanopartikel der ersten Lage oder der ersten Lage und weiterer folgender Lagen vollständig abgetragen, so verliert das Bauteil seine typische Farbe. Da die Farbgebung an sich temperaturstabil ist, muss eine Veränderung der Farbe auf jeden Fall auf einen fortschreitenden Verschleiß und nicht auf eine Verfälschung der Farbgebung durch die Farbpigmente zurückgeführt werden.

Alternativ ist erfindungsgemäß vorgesehen, dass die Schicht als Gradientenschicht ausgeführt ist, wobei zumindest die Farbstoff-Nanopartikel in einer mit zunehmendem Abstand zur Oberfläche abnehmenden Konzentration in der Schicht verteilt sind. Hierdurch wird in ähnlicher Weise dem Umstand Rechnung getragen, dass die Farbstoff-Nanopartikel nur an der Oberfläche der Schicht wirksam werden, wie dies bereits zum mehrlagigen Schichtaufbau erläutert wurde. Ein Verschleißindikator durch Inspektion der Farbgebung der Schicht lässt sich auch im Falle der Ausführung der Schicht als Gradientenschicht verwirklichen. In diesem Fall nimmt mit fortschreitendem Verschleiß durch Abtragung der Schichtoberfläche die Farbintensität der Schicht ab, da die Konzentration an für die Farbgebung verantwortlichen Farbstoff-Nanopartikeln sich stetig verringert.

Weiterhin betrifft die Erfindung ein Verfahren zum Erzeugen einer keramischen Schicht auf einem Bauteil, bei dem auf das Bauteil ein Beschichtungsstoff, bestehend aus einem Lösungsmittel, den gelösten Vorstufen einer Keramik und dispergierten Partikeln aufgetragen wird. Danach wird das mit dem Beschichtungsstoff versehene Bauteil einer Wärmebehandlung unterworfen, bei der das Lösungsmittel verdampft und die Vorstufen der Keramik unter Einlagerung der Partikel in die keramische Schicht umgewandelt werden, wobei die Partikel die Farbe der Oberfläche der Schicht beeinflussen.

Ein derartiges Verfahren ist eingangs bereits anhand der dort angeführten Patentdokumente erläutert worden. Ausgehend hiervon ergibt sich eine weitere Aufgabe der Erfindung darin, ein Verfahren der oben aufgeführten Art zum Erzeugen einer keramischen Schicht anzugeben, mit dem sich keramische Schichten mit einer vergleichsweise temperaturstabilen Einfärbung erzeugen lassen.

Diese Aufgabe wird mit dem genannten Verfahren erfindungsgemäß dadurch gelöst, dass als Partikel Nanopartikel verwendet werden, wobei einerseits Aluminiumoxid-Nanopartikel dispergiert werden und andererseits Farbstoff-Nanopartikel dispergiert werden, wobei letztere aus einer Verbindung des Spinell-Typs bestehen und wobei zumindest ein Teil der Farbstoff-Nanopartikel an der Oberfläche freiliegen.

Das mit dem erfindungsgemäßen Verfahren hergestellte beschichtete Bauteil weist die eingangs bereits erläuterten Vorteile auf. Diese bestehen insbesondere in einer Temperaturbeständigkeit der Farbgebung der Oberfläche, die bei bis zu 1000° C liegen kann und daher eine temperaturstabile Einfärbung von hochtemperaturbeanspruchten Bauteilen wie z. B. Kompressor- oder Turbinenschaufeln einer Gasturbine ermöglicht.

Der bei dem Verfahren zum Einsatz kommende Beschichtungsstoff besteht aus einer Dispersion. Neben den Aluminiumoxid-Nanopartikeln und den Farbstoff-Nanopartikeln können auch weitere Partikel in diese Dispersion eingebracht werden, die beispielsweise die Korrosionsschutz-Eigenschaften der Beschichtung verbessern.

Als Dispersionsmedien eignen sich die im genannten Stand der Technik aufgeführten Substanzen, insbesondere phosphor-, chromat-, molybdän- oder wolframhaltige Säuren. Der Beschichtungsstoff kann weiterhin als chemische Bestandteile des Dispersionsmediums oder in diesem gelöst Vorstufen der zu erzeugenden Keramik enthalten. Diese werden durch die Wärmebehandlung in die keramische Schichtmatrix überführt.

Gemäß einer Ausgestaltung des Verfahrens ist vorgesehen, dass die Nanopartikel mit einem Anteil von mindestens 5 bis höchstens 40 Gew-% in den Beschichtungswerkstoff gegeben werden. Die Prozentangaben dieser Anmeldung verstehen sich auch ohne genauere Angaben als Angaben in Masse-Prozent. Durch Verwendung von Nanopartikeln lässt sich vorteilhaft die erreichbare Konzentration an Partikeln in der Dispersion erhöhen, so dass die Funktionalität der zu bildenden Schicht stärker von den zugesetzten Nanopartikeln beeinflusst werden kann. Die hergestellten Dispersionen sind vorteilhaft zudem stabiler.

Der Beschichtungsstoff kann je nach der gewünschten Art der Verarbeitung gasförmig, flüssig oder pastenförmig sein. Je nach Viskosität des Beschichtungsstoffes können unterschiedliche Verfahren zur Aufbringung des Beschichtungsstoffes auf das Substrat Anwendung finden. Zu nennen sind u. a. Sprühen, Spritzen, Rakeln, Tauchen, Schleudern oder Reiben.

Eine besondere Ausgestaltung der Erfindung erhält man, wenn das Masse-Verhältnis von Aluminiumoxid-Nanopartikeln zu Farbstoff-Nanopartikeln zwischen 1:3 und 3:1 liegt. Es hat sich gezeigt, dass bei diesen Verhältnissen auch das Verhältnis der beschriebenen Wirkungen einer charakteristischen Farbgebung der Oberfläche durch die Farbstoff-Nanopartikel und einer temperaturstabilisierenden Wirkung durch die Aluminiumoxid-Nanopartikel am ausgewogensten ist.

Weitere Einzelheiten der Erfindung werden nachfolgend anhand der Zeichnung beschrieben. Gleiche oder sich entsprechende Zeichnungselemente sind in den Figuren jeweils mit den gleichen Bezugszeichen versehen und werden nur insoweit mehrfach erläutert, wie sich Unterschiede zwischen den einzelnen Figuren ergeben. Es zeigen
- Figur 1 und 2: schematische Schnitte von Ausführungsbeispielen der erfindungsgemäßen Schicht, die als mehrlagige Schicht ausgeführt sind und
- Figur 3: ein Ausführungsbeispiel der erfindungsgemäßen Schicht, die als Gradientenschicht ausgeführt ist.

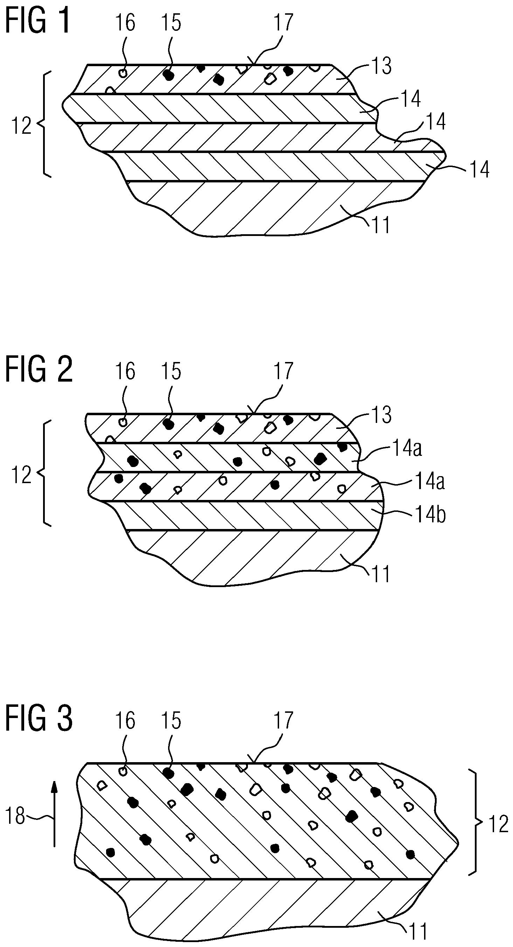

Ein Bauteil 11 gemäß Figur 1 weist eine Schicht 12 auf, die aus einer Decklage 13 und weiteren Lagen 14 besteht. In die Decklage sind Farbstoff-Nanopartikel 15 und Aluminiumoxid-Nanopartikel 16 eingebracht, die an einer Oberfläche 17 des Bauteils, also an der durch die Decklage 13 gebildeten Oberfläche 17 freiliegen. Die folgenden Lagen 14 weisen keine der genannten Nanopartikel auf.

Als Nanopartikel werden Partikel mit einer Größe von unter einem Mikrometer - bevorzugt von weniger als 100 Nanometern verstanden. Die Farbstoff-Nanopartikel bestehen aus jeweils einem der angegebenen Spinell-Verbindungen. Um die Oberflächenfarbe durch eine Farbmischung zu erzeugen, müssen jeweils Farbstoff-Nanopartikel unterschiedlicher Zusammensetzung miteinander gemischt werden, wobei jedoch jedes Farbstoff-Nanopartikel lediglich eine Verbindung eines Typs aufweist.

Das Bauteil gemäß Figur 2 unterscheidet sich von dem gemäß Figur 1 lediglich dadurch, dass zusätzlich in den beiden auf die Decklage 13 folgenden Lagen 14a Farbstoff-Nanopartikel 15 und Aluminium-Nanopartikel 16 vorgesehen sind. Lediglich die letzte, auf dem Bauteil 11 befindliche Lage 14b weist diese Nanopartikel nicht auf.

Bei der Schicht 12 könnte es sich um eine Korrosionsschutzschicht handeln, wobei deren Korrosionsschutzwirkung bei einem verschleißbedingten Abtrag der Schicht erhalten bleibt, bis die Dicke der Lage 14b erreicht ist. Eine Farbgebung der Oberfläche 17 bleibt also bei einem lagenweisen Abtrag der Lagen 13 und 14a erhalten. Erst wenn ein Schichtabtrag soweit fortgeschritten ist, dass die Lage 14b erreicht wird, kommt es zu einer Farbveränderung der Oberfläche, der als Indikator für ein Auswechseln des Bauteils bzw. eine Erneuerung der Schicht gewertet werden kann.

Bei der Schicht 12 gemäß Figur 3 handelt es sich um eine Gradientenschicht. Dies bedeutet, dass die Konzentration C an Aluminiumoxid-Nanopartikeln 16 und Farbstoff-Nanopartikeln 15 zur Oberfläche 17 hin zunimmt (angedeutet durch einen Pfeil 18). Bei diesem Ausführungsbeispiel führt ein verschleißbedingter Schichtabtrag zu einem sukzessiven Nachlassen der Farbintensität der Oberfläche, so dass auch dieser Parameter als Indikator für den fortschreitenden Schichtverschleiß ausgewertet werden kann.

Die Aluminiumoxid-Nanopartikel haben die Zusammensetzung Al₂O₃.

## Patentansprüche

1. Bauteil mit einer die Oberfläche (17) bildenden keramischen Schicht (12), wobei in der Schicht Partikel eingelagert sind, die die Oberflächenfarbe beeinflussen, wobei die eingelagerten Partikel Nanopartikel sind und wobei
- einerseits Aluminiumoxid-Nanopartikel (16) vorgesehen sind und
- andererseits Farbstoff-Nanopartikel (15) vorgesehen sind, wobei diese aus einer Verbindung des Spinell-Typs bestehen und wobei zumindest ein Teil der Farbstoff-Nanopartikel an der Oberfläche (17) frei liegen, wobei
- die Schicht (12) mehrere Lagen (13,14) aufweist, wobei zumindest die Farbstoff-Nanopartikel (15) nur in der die Oberfläche (17) bildenden Decklage (13) oder in der die Oberfläche (17) bildenden Decklage (13) und in an diese anschließenden Lagen (14a,14b,14c), nicht jedoch in allen Lagen vorgesehen sind, oder
- die Schicht (12) als Gradientenschicht ausgeführt ist, wobei zumindest die Farbstoff-Nanopartikel (15) in einer mit zunehmendem Abstand zur Oberfläche (17) abnehmenden Konzentration in der Schicht verteilt sind.

2. Bauteil nach Anspruch 1, wobei dieses thermisch hoch beanspruchbar, insbesondere eine Turbinenschaufel oder eine Kompressorschaufel einer Gasturbine ist.

3. Verfahren zum Erzeugen einer keramischen Schicht (12) auf einem Bauteil (13), bei dem
- auf das Bauteil (13) ein Beschichtungsstoff, bestehend aus einem Lösungsmittel, den gelösten Vorstufen einer Keramik und dispergierten Partikeln aufgetragen wird,
- das mit dem Beschichtungsstoff versehene Bauteil (13) einer Wärmebehandlung unterworfen wird, bei der das Lösungsmittel verdampft und die Vorstufen der Keramik unter Einlagerung der Partikel in die keramische Schicht umgewandelt werden, wobei als Partikel Nanopartikel verwendet werden, die die Farbe der Oberfläche (17) der Schicht beeinflussen,
wobei
- einerseits Aluminiumoxid-Nanopartikel (16) dispergiert werden und
- andererseits Farbstoff-Nanopartikel (15) dispergiert werden, wobei diese jeweils aus einer Verbindung des Spinell-Typs bestehen und wobei zumindest ein Teil der Farbstoff-Nanopartikel an der Oberfläche (17) frei liegen, wobei
- die Schicht (12) in mehreren Lagen (13,14) aufgebracht wird, wobei zumindest die Farbstoff-Nanopartikel (15) nur in der die Oberfläche (17) bildenden Decklage (13) oder in der die Oberfläche (17) bildenden Decklage (13) und in an diese anschließenden Lagen (14a,14b,14c), nicht jedoch in allen Lagen vorgesehen werden, oder
- die Schicht (12) als Gradientenschicht aufgebracht wird, wobei zumindest die Farbstoff-Nanopartikel (15) in einer mit zunehmendem Abstand zur Oberfläche (17) abnehmenden Konzentration in der Schicht verteilt sind.

4. Verfahren nach Anspruch 3, wobei die Nanopartikel mit einem Anteil von mindestens 5 bis höchstens 40 Gew.-% in den Beschichtungsstoff gegeben werden.

5. Verfahren nach Anspruch 3 oder 4, wobei das Masse-Verhältnis von Aluminiumoxid-Nanopartikeln zu Farbstoff-Nanopartikeln zwischen 1:3 und 3:1 liegt.

## Claims

1. Component with a ceramic coating (12) forming the surface (17), wherein particles which influence the surface colour are embedded in the coating, wherein the embedded particles are nanoparticles and wherein
- on the one hand aluminium oxide nanoparticles (16) are provided and
- on the other hand colourant nanoparticles(15) are provided, wherein these consist of a spinel-type compound, and wherein at least some of the colourant nanoparticles are exposed on the surface (17),
wherein
- the coating (12) features a number of layers (13, 14), wherein at least the colourant nanoparticles (15) are only provided in the cover layer (13) forming the surface (17) or in the cover layer (13) forming the surface (17) and in subsequent layers (14a, 14b, 14c), but not in all layers, or
- the coating (12) is designed as a gradient coating, wherein at least the colourant nanoparticles (15) are distributed in the coating in a concentration which reduces as the distance to the surface (17) increases.

2. Component according to claim 1,
wherein this is able to withstand high thermal stress, and is especially a turbine blade or a compressor blade of a gas turbine.

3. Method for creating a ceramic coating (12) on a component (13), in which
- a coating substance, consisting of a solvent, the dissolved precursors of a ceramic and dispersed particles are applied to the component (13),
- the component (13) provided with the coating substance is subjected to a heat treatment, in which the solution is evaporated and the precursors of the ceramic are converted, with embedding of the particles in the ceramic layer, wherein nanoparticles which influence the colour of the surface (17) of the coating are used as particles,
wherein
- on the one hand aluminium oxide nanoparticles (16) are dispersed and
- on the other hand colourant nanoparticles (15) are dispersed, wherein these consist of a spinel-type compound, and wherein at least some of the colourant nanoparticles are exposed on the surface (17),
wherein
- the coating (12) is applied in a number of layers (13, 14), wherein at least the colourant nanoparticles (15) are only provided in the cover layer (13) forming the surface (17) or in the cover layer (13) forming the surface (17) and in subsequent layers (14a, 14b, 14c), but not in all layers, or
- the coating (12) is designed as a gradient coating, wherein at least the colourant nanoparticles (15) are distributed in the coating in a concentration which reduces as the distance to the surface (17) increases.

4. Method according to claim 3,
wherein the nanoparticles are put into the coating substance with a proportion of at least 5 to maximum 40% by weight.

5. Method according to claim 3 or 4,
wherein the mass ratio of aluminium oxide nanoparticles to colourant nanoparticles lies between 1:3 and 3:1.

## Revendications

1. Composant comprenant une couche (12) en céramique formant la surface (17), dans lequel il est incorporé dans la couche des particules, qui influent sur la couleur de la surface, les particules incorporées étant des nanoparticules, et dans lequel
- il est prévu, d'une part, des nanoparticules (16) en oxyde d'aluminium et
- il est prévu, d'autre part, des nanoparticules (15) de colorant, ces nanoparticules étant constituées d'un composé du type spinelle, et dans lequel au moins une partie des nanoparticules de colorant est libre sur la surface (17),
dans lequel
- la couche (12) a plusieurs strates (13, 14), au moins les nanoparticules (15) de colorant n'étant prévues que dans la strate (13) supérieure formant la surface (17) ou dans la strate (13) supérieure formant la surface (17) et dans les strates (14a, 14b, 14c) s'y raccordant, mais non dans toutes les strates ou
- la couche (12) est réalisée sous la forme d'une couche à gradient, dans lequel au moins les nanoparticules (15) de colorant sont réparties dans la couche à une concentration diminuant au fur et à mesure qu'augmente la distance à la surface (17).

2. Composant suivant la revendication 1, dans lequel celui-ci peut être très sollicité thermiquement, en étant notamment une aube de turbine ou une aube de compresseur d'une turbine à gaz.

3. Procédé de production d'une couche (12) en céramique sur un composant (13), dans lequel
- on dépose, sur le composant (13), une substance de revêtement constituée d'un solvant, des précurseurs dissouts d'une céramique et de particules dispersées,
- on soumet le composant (13) pourvu de la substance de revêtement à un traitement thermique, dans lequel le solvant s'évapore et les précurseurs de la céramique sont transformés avec incorporation des particules en la couche céramique, en utilisant, comme particules, des nanoparticules, qui influent sur la couleur de la surface (17) de la couche,
dans lequel
- on disperse d'une part des nanoparticules (16) en oxyde d'aluminium,
- on disperse d'autre part des nanoparticules (15) de colorant, celles-ci étant constituées d'un composé de type spinelle et au moins une partie des nanoparticules de colorant étant libre sur la surface (17),
dans lequel
- on dépose la couche (12) en plusieurs strates (13, 14) au moins les nanoparticules (15) de colorant n'étant prévues que dans la strate (13) supérieure formant la surface (17) ou dans la strate (13) supérieure formant la surface (17) et dans les strates (14a, 14b, 14c) s'y raccordant, mais non dans toutes les strates ou
- la couche (12) est réalisée sous la forme d'une couche à gradient, dans lequel au moins les nanoparticules (15) de colorant sont réparties dans la couche à une concentration diminuant au fur et à mesure qu'augmente la distance à la surface (17).

4. Procédé suivant la revendication 3,
dans lequel
on ajoute les nanoparticules en une proportion d'au moins 5 à au plus 40% en poids à la substance de revêtement.

5. Procédé suivant la revendication 3 ou 4,
dans lequel
le rapport en masse des nanoparticules d'oxyde d'aluminium aux nanoparticules de colorant est compris en 1:3 et 3:1.
